# EUROPEAN PATENT APPLICATION

(11) **EP 4 782 515 A1**
(43) Date of publication of application: **29.07.2026**
(21) Application number: 24863900.7
(22) Date of filing: 12.09.2024
(51) Int. Cl.: C09K 8/532, C01G 49/08, C01G 9/02, B01D 53/34

(54) **USE OF IRON- OR ZINC-BASED NANOSTRUCTURED COMPOUNDS IN DRILLING FLUIDS FOR H2S SEQUESTRATION**

(30) Priority: 13.09.2023 BR 102023018569
(71) Applicant: Petroleo Brasileiro S.A. - PETROBRAS, 20031-912 Rio de Janeiro (BR); Nchemi Engenharia De Materiais Ltda - NCHEMI, São Paulo 13573-900 São Carlos (BR)
(72) Inventor: RODRIGUES DE MOURA, Bruno, RJ, 21941-915 Rio de Janeiro (BR); ESCALFONI JUNIOR, Rainerio, RJ, 21941-915 Rio de Janeiro (BR); CASTRO BONFIM, Andre Luiz, RJ, 21941-915 Rio de Janeiro (BR); DE GOES CONTI, Tiago, São Carlos, 13573-900 São Paulo (BR); TOGNOLI LEITE, Lucas Daniel, São Carlos, 13573-900 São Paulo (BR); RAMOS DE LIMA, Bruno Henrique, São Carlos, 13573-900 São Paulo (BR); DE REGO MONTEIRO PINHEIRO DE LIMA, Vitor Augusto, RJ, 21941-915 Rio de Janeiro (BR)
(74) Representative: Clarke, Modet y Cía., S.L.
(86) International application number: PCT/BR2024/050412
(87) International publication number: WO 2025/054688

(57) **Abstract**

The present invention relates to the use of nanostructured iron- or zinc-based compounds, developed for application in Water-Based Drilling Fluids (WBDF) and Non-Aqueous Drilling Fluids (NADF). In addition, the present invention evaluates the H₂S scavenging capacity of these nanostructured compounds and compares the same to the conventional metal oxides and other currently used scavengers.

## Description

### Field of the Invention

The present invention pertains to the technical field of oil exploration and production, more specifically, Well Drilling and Completion.

The present invention relates to the innovative application of products based on nanostructured iron- or zinc-based compounds that are added to drilling fluids for hydrogen sulfide (H₂S) scavenging.

### Backgrounds of the Invention

The hydrogen sulfide (H₂S) is frequently found in oil and gas geological formations. This compound is corrosive to equipment used in well drilling, such as drill pipes, and to well casing. When a drill pipe ruptures due to hydrogen sulfide embrittlement (due to a phenomenon called Sulfide Stress Corrosion (SSC)), the drilling operation needs to be stopped and the drill string repaired. H₂S is also an environmental pollutant and an occupational hazard for the operators involved in drilling and completion activities of the wells. Low concentrations of hydrogen sulfide cause irritation of the conjunctiva and mucous membranes, headaches, dizziness, nausea, and lassitude. An exposure to high concentrations can result in death. Therefore, its removal from oil is essential and must be done as early as possible in the production process.

In offshore oil exploration and production fields, H₂S is often found in large quantities. In this sense, there is a concern among oil companies and the scientific community to develop researches and technologies for its removal during the crude oil extraction process. In this context, the companies have preferred to mitigate the concentration of hydrogen sulfide gas before the oil reaches the platform, that is, along the production string, due to the risk of pipeline corrosion.

Among the practices adopted for the removal of hydrogen sulfide from the oil, the application of chemical scavengers can be highlighted. These compounds react with the contaminant, removing it from the free form in which it is found in the fluid and, consequently, mitigating its aggressiveness.

There are several types of scavengers available on the market; however, selecting the best one is not trivial. The chemical compound must possess important characteristics such as selectivity and reversibility of the reaction with H₂S.

In oil production fields for large volumes of gas production, the cost of the H₂S scavenging process can be substantial, of millions or even tens of millions of dollars per year.

In general, there are two categories of scavengers: regenerative and non-regenerative. In regenerative scavengers, the H₂S absorption is reversible; however, this type of scavenger is not normally used in oil production fields. The non-regenerative scavengers are more applicable in these cases and can be divided into several categories, such as: basic metallic solid components; oxidizing chemicals; aldehydes and their related products; metal carboxylates and chelates (which can be regenerative); products of the reaction of aldehydes with amines, including triazines; and other amine-based products.

The solid scavengers are generally based on iron or zinc oxides and cannot be injected in liquid form. The products resulting from the use of these scavengers are mostly hydrophilic, which facilitates their adhesion to water and consequently their greater efficiency in removing H₂S. The liquid scavengers are generally atomized and can be inserted at any point in the production line.

The aldehyde-type scavengers are capable of scavenging H₂S to form different sulfur compounds. The typical aldehydes that stand out as scavengers are: formaldehyde, glutaraldehyde, acrolein, and glyoxal. Triazines are also important scavengers, but they are the result of the reaction of aldehydes with amines.

Thus, given so many possibilities, it is essential to thoroughly study the nature of the scavenger and its injection site, since these variables determine the efficiency and cost of the scavenging (ALMEIDA, 2013; KELLAND, 2014).

The additivation of the drilling fluids with iron- or zinc-based compounds aims at scavenging H₂S through reactions that form iron or zinc sulfides. However, in this case, the consumption of scavenger product is high, and the cost of such input is significantly high in the operations.

Since the reaction between H₂S and iron and zinc oxides occurs mainly and at a higher rate on the surface of the solid, increasing the surface area of the scavenger through the use of nanostructures becomes a viable strategy to increase the availability of scavenger for reaction and, therefore, increase the performance. Additionally, it is known that during an H₂S abatement operation in drilling fluids, the reaction between the scavengers and the acid gas (H₂S) is hindered by the presence of other components in the drilling fluid, such as starches, gums, and other polymers, substances capable of passivating the surface of the scavengers.

The higher surface area/volume ratio typical of nanostructures provides greater mass available for sulfide reaction when compared to larger structures; therefore, it is possible to achieve the same amount of H₂S scavenged using a smaller mass of scavenger, resulting in logistical gains (transport and storage) and reduced environmental impact (less use of metals in the process).

In order to increase the reactivity of the H₂S scavenger and reduce the amount used, the present invention utilizes and evaluates the H₂S scavenging capacity of nanostructured iron- or zinc-based compounds, suitable for application in Water-Based Drilling Fluids (WBDF) and Non-Aqueous Drilling Fluids (NADF).

### State of the Art

Document US 4,008,775 describes a process in which porous iron oxide particles are used in drilling muds, mainly aqueous drilling muds, to remove hydrogen sulfide (H₂S) released from a well during a drilling operation.

These iron oxides are described as having an ideal composition of Fe₃O₄, a particle size of about 1.5 to 60 µm, and a surface area at least ten times larger than magnetite (Fe₃O₄) particles of equal size.

Document WO 82/02347 refers to the use of particulate iron oxides in the removal of hydrogen sulfide from non-aqueous liquids, such as liquid hydrocarbons.

The aforementioned document provides a process for the removal of H₂S from a substantially anhydrous non-aqueous liquid (liquid hydrocarbon containing said sulfide) comprising contacting the H₂S in said liquid with dry or substantially dry iron oxide particles with a surface area of at least 3.5 m²/g and composed of a crystalline phase of Fe₂O₃, Fe₃O₄ and their combinations together with an amorphous Fe₂O₃ fraction, said particles being used in a sufficient quantity to reduce the concentration of H₂S in said liquid to a predetermined level.

The contact is carried out for a period sufficient for the formation of stable reaction products, including FeS₂ (pyrite) and Fe₃S₄ (greigite).

### Summary of the Invention

The present invention relates to the use of nanostructured iron- or zinc-based compounds, developed for application in Water-Based Drilling Fluids (WBDF) and Non-Aqueous Drilling Fluids (NADF). In addition, the present invention evaluates the H₂S scavenging capacity of these nanostructured compounds and compares the same to conventional metal oxides currently used.

### Brief Description of the Figures

Figure 1 presents a graph that shows the behavior (profile) of the H₂S concentration in the gas phase over the test time. Conditions: 100% saline solution with 35 g/L in NaCl, T = 80 °C.
Figure 2 presents a graph of the H₂S scavenging capacity in relation to the total mass of the evaluated product. Conditions: 100% saline solution with 35 g/L in NaCl, T = 80 °C.
Figure 3 presents a graph of the H₂S scavenging capacity in relation to the Active Matter (AM) mass of each evaluated product. Conditions: 100% saline solution with 35 g/L in NaCl, T = 80 °C.
Figure 4 presents a graph showing the behavior (profile) of the H₂S concentration in the gas phase over the test time with the compounds used in the functionalization of the nanostructures. Conditions: 100% saline solution with 35 g/L in NaCl, T = 80 °C.
Figure 5 presents a graph showing the behavior (profile) of the H₂S concentration in the gas phase over the test time with 2-aminoethanol at two dosages, 0.3 Ib/bbl (0.086 g/L) and 3.0 Ib/bbl (8.571 g/L). Conditions: 100% saline solution with 35 g/L in NaCl, T = 80 °C.
Figure 6 presents a graph showing the behavior (profile) of the H₂S content in the gas phase throughout the test evaluating the H₂S scavenging capacity in saline solution. Conditions: 100% saline solution with 35 g/L in NaCl, T = 80 °C.
Figure 7 presents a graph of the H₂S scavenging capacity in kg of H₂S/kg of scavenger in saline solution. Conditions: 100% saline solution with 35 g/L in NaCl, T = 80 °C.
Figure 8 presents a graph of the H₂S scavenging capacity in kg of H₂S/kg of AM (Active Matter) in saline solution. Conditions: 100% saline solution with 35 g/L in NaCl, T = 80 °C.
Figure 9 presents a graph showing the behavior (profile) of the H₂S content in the gas phase throughout the test evaluating the H₂S scavenging capacity in WBDF (Water-Based Drilling Fluid). T = 80 °C.
Figure 10 presents a graph of the H₂S scavenging capacity in kg of H₂S/kg of scavenger in WBDF (Water-Based Drilling Fluid). T = 80 °C.
Figure 11 presents a graph of the H₂S scavenging capacity in kg of H₂S/kg of AM (Active Matter) in WBDF (Water-Based Drilling Fluid). T = 80° C.
Figure 12 presents a graph showing the behavior (profile) of the H₂S content in the gas phase throughout the test evaluating the H₂S scavenging capacity in NADF (Non-Aqueous Drilling Fluid). T = 80 °C.
Figure 13 presents a graph of the H₂S scavenging capacity in kg of H₂S/kg of scavenger in NADF (Non-Aqueous Drilling Fluid). T = 80 °C.
Figure 14 presents a graph of the H₂S scavenging capacity in kg of H₂S/kg of AM (Active Matter) in NADF (Non-Aqueous Drilling Fluid). T = 80 °C.

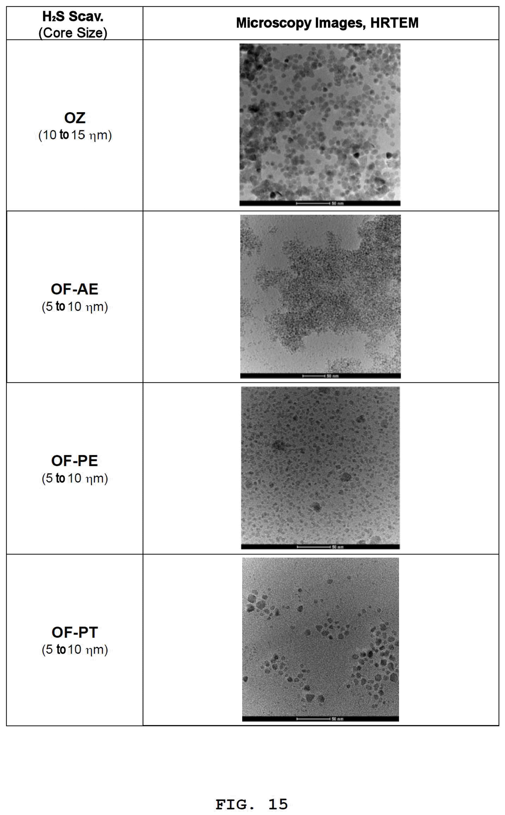

Figure 15 presents size data and high-resolution transmission electron microscopy (HRTEM) images of the nanostructures of the present invention.

### Detailed Description of the Invention

The present invention proposes the use of nanostructured iron- or zinc-based compounds, compatible for application in Water-Based Drilling Fluids (WBDF) and Non-Aqueous Drilling Fluids (NADF), for the purpose of scavenging H₂S present in the medium.

The nanostructured compounds used in the present invention are products previously developed by the company nChemi, which acted as a strategic partner and co-inventor of the present innovation. Although commercially available, these nanostructured compounds have unprecedented use as H₂S scavengers in drilling fluids, both by their developers and in the current technical-scientific literature. There are documents on the use of metal oxides, such as Zn and Fe, although not of the type of nanostructured compound described herein, which constitutes an innovation in the sector.

The nanostructured compounds used in the present invention and their characteristics are described in Table I. Such compounds consist of an inorganic core that acts as the Active Matter (AM) capable of reacting with H₂S, a functionalization compound based on organic molecules and chemically bonded to the inorganic core, called the organic coating, which provides greater stability and dispersibility to the active matter, and a solvent chosen to provide greater solubility of the product in the application medium, i.e., WBDF or NADF. In addition to the active matter, Zn or Fe, the compounds used in the functionalization were also evaluated as H₂S scavengers.

**Table I - Characteristics of the Nanostructured Compounds**

| Nanostructured Compound Abbreviation | OZ | OF-AE | OF-PE | OF-PT |
|---|---|---|---|---|
| Inorganic Core | Nanostructur e of ZnO | Nanostructur e of Fe₃O₄ | Nanostructur e of Fe₃O₄ | Nanostructure of Fe₃O₄ |
| Size of the Inorganic Core | 10 to 15 nm | 5 to 10 nm | 5 to 10 nm | 5 to 10 nm |
| Active Matter Content (% m) | 3.2 | 3.2 | 2.3 | 2.3 |
| Functionalizatio n | - | 10 to 15% m/m of 2-aminoethanol | 30 to 40% m/m of Polyethylene glycol MM 1500 | 30 to 40% m/m of Polytetrahydrofura n MM 1000 |
| Functionalizatio n Structure | - | 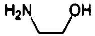 | 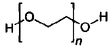 | 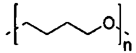 |
| Solid | 50 mg/g | 50 mg/g | 50 mg/g | 50 mg/g |
| Concentration (core + functionalization ) | | | | |
| Solvent | Water | Water | Water | Tetrahydrofuran |
| Application Medium | Aqueous | Aqueous | Aqueous | Organic |

The compounds used were produced aiming to obtain a concentration of 50 mg/g of solids (core + functionalizing compound) in relation to the solvent, which is equivalent to 5% m/m. Additionally, the expected Zn or Fe active matter content in each product are estimates, considering the average mass percentage of the functionalization and that the oxide phase is in the stoichiometric relation. However, in nanoparticles of this size range, deviations in the stoichiometry are common. The zinc oxide (ZnO)-based nanostructured compound does not present a relevant functionalization, and in this case the concentration of the active matter corresponds to the mass of zinc in the oxide.

In addition to the nanostructured compounds of the present invention, for comparison purposes, a H₂S scavenger containing 83% m/m monoethanolamine-triazine (MEA-triazine), conventionally used in the production environment, was also evaluated under the same experimental conditions.

The results were also compared with historical data on conventional solid H₂S scavengers, applied in drilling fluids, zinc oxide (ZnO)- and iron oxide-based in the magnetite phase (Fe₃O₄), and an iron (II) gluconate-based H₂S scavenger, cited in the State of the Art as an alternative to the metal oxides for non-aqueous drilling fluids.

Table II presents the characteristics of products used for comparison purposes. It is worth mentioning that the iron oxide found in the sample was magnetite (Fe₃O₄), although the current guideline is to use hematite (Fe₂O₃) in this type of product, in order to avoid interference in the results obtained in magnetic logging.

**Table II - H₂S Scavengers Used as Reference and Comparison of Results**

| Identification | Active Matter (AM) | AM Content | XRD and NMR Structure | Application Medium |
|---|---|---|---|---|
| MEA-Triazine | Monoethanolamine-triazine | 83% m/m | 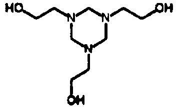 | Aqueous or Organic |
| OxZn | Zinc oxide | 80% m/m of Zn | Zincite - ZnO Hydrozincite - Zn₅(OH)6(CO₃)₂ | Aqueous |
| OXFe | Iron oxide | 66% m/m of Fe | Magnetite - Fe₃O₄ Quartz - SiO₂ (traces) | Aqueous |
| Gluc Fe | Iron (II) gluconate | 69% m/m of Fe | | Organic |

### Drilling Fluids

Two drilling fluids were used in the tests, following the same formulations and characteristics as the fluids currently used in the field (Table III). An aqueous solution containing 35 g/L of sodium chloride (NaCl) was incorporated into the test matrix as a test fluid.

**Table III - Drilling Fluids Used in the Evaluation of the H₂S Scavenging Capacity**

| WBDF | Water-Based Drilling Fluid | BR-CARB |
|---|---|---|
| NADF | Non-Aqueous Drilling Fluid | OLEFINIC 60/40 |

Table IV presents the typical physicochemical characteristics of the two drilling fluids used in the performance evaluation tests of the nanostructured H₂S scavengers of this invention. The aqueous fluid WBDF is denser and more viscous than the organic fluid, NADF.

**Table IV - Drilling Fluid Formulation**

| WBDF | | | NADF | |
|---|---|---|---|---|
| Components | Concentration | | Components | Concentration |
| Industrial Water | q.s. | | Internal Olefin | 0.57 bbl/bbl (0.57 L/L) |
| NaCl | 50 Ib/bbl (142.850 g/L) | | Lime | 5 lb/bbl (14.285 g/L) |
| Antifoaming Agent | 0.05 gal/bbl (1.15 mL/L) | | Primary Emulsifier (Cybermull) | 8 lb/bbl (22.856 g/L) |
| (Polifoam) | | | | |
| Xanthan Gum | 2 Ib/bbl (5.714 g/L) | | Secondary Emulsifier (Cyberplus) | 4 lb/bbl (11.428 g/L) |
| HP Starch | 8 Ib/bbl (22.856 g/L) | | Sat. CaCl₂ Solution | 0.39 bbl/bbl (0.39 L/L) |
| Magnesium Oxide | 1.5 lb/bbl (4.286 g/L) | | Filtrate Reducer (Cybertrol) | 1 Ib/bbl (2.857 g/L) |
| Lubricant (Liovac 4260) | 2% v/v | | Organophilic Clay (CybervisHT) | 2 Ib/bbl (5.714 g/L) |
| Bactericide (Polibac TC) | 0.5 Ib/bbl (1.429 g/L) | | Rheological Modifier (Cybervis RM) | 1 Ib/bbl (2.857 g/L) |
| Magnesium Peroxide | 1 Ib/bbl (2.857 g/L) | | Humectant (Cybercoat) | 2 Ib/bbl (1.628 g/L) |
| Limestone 2-44 | q.s. to 9.6 ppg (1150.33 g/L) | | Barite | q.s. to 9.6 ppg (1150.33 g/L) |

**Table V - Physicochemical Characteristics of the Drilling Fluids Used**

| Parameter | WBDF | NADF |
|---|---|---|
| Specific gravity (ppg) | 9.8 (1174.30 g/L) | 8.1 (970.59 g/L) |
| Filtrate (mL) | 2.5 | 4 |
| Electrical stability (Volts) | (1) | 243 |
| Salinity (ppm) | 148,390 in NaCl | 172,850 in CaCl₂ |
| Water (%) | 90 | 31 |
| Oil (%) | 0 | 48 |
| Solids (%) | 10 | 21 |

| | | |
|---|---|---|
| (1) The electrical stability measurement is performed only on emulsions, not performed in WBDFs. | | |

### Evaluation of physicochemical characteristics

In order to confirm the iron and zinc content in each product, the samples of nanostructured H₂S scavengers of this invention were characterized by flame atomic absorption spectrometry (FAAS), using an Agilent brand piece of equipment, model 280 FS. The analysis conditions used in the piece of equipment are summarized in Table VI.

**Table VI - Analysis Conditions Used in the Atomic Absorption Spectrometer (FAAS)**

| Conditions used in the analysis | Iron (Fe) | Zinc (Zn) |
|---|---|---|
| Wavelength/slit | (248.3/0.2) nm | (213.9/1.0) nm |
| Background corrector (deuterium lamp) | on | on |
| Flame | Air-acetylene | Air-acetylene |

For the determination of these metals in the aqueous medium application samples, aliquots of the H₂S scavengers were diluted in aqueous solution acidified with subdistilled nitric acid. Standards were prepared in aqueous medium with five known concentration levels and one blank. For the organic medium application sample, the preparation involved diluting aliquots of the sample in xylene, as well as the standards used in the tests. The tests were performed in duplicate with the samples, standards, and blank of the reagents.

### Evaluation of H₂S scavenging capacity

The evaluation of the H₂S scavenging capacity of the products consists of subjecting the reaction medium to a constant flow of 0.6 L/min of a gas mixture containing 3.2% mol/mol H₂S, at known and controlled pressure and temperature. The H₂S concentration in the gas phase is measured throughout the test period after passing through the reaction system, using the analytical technique of gas chromatography. After saturation of the reaction medium with the gas mixture, an aliquot of the H₂S scavenging product to be evaluated is added at pre-established concentrations. The mass of H₂S that each tested product is able to reduce from the original gas stream indicates the relative scavenging capacity between the products.

The experimental apparatus used in the tests consists of a 1.0 liter Hastelloy^{®} container, equipped with instrumentation for monitoring pressure, temperature and gas flow rate. Throughout the test, the fluid is kept heated and mechanically agitated.

The experimental conditions used in the H₂S scavenging capacity evaluation tests seek to approximate the field conditions, including the dosages of the solid products. However, previous studies and preliminary exploratory tests indicated a superior efficiency of the liquid products compared to the solid products, so a lower dosage was adopted for the liquid products in the comparative tests.

The experimental conditions adopted in the H₂S scavenging capacity evaluation tests were:
- Temperature: 80 °C
- Pressure: 5 psig (approx. 20 psia or 0.14 MPa)
- Volume: 350 mL
- Fluid: Saline solution with 35 g/L in NaCl
- NAF - Non-Aqueous Fluid
- WBF - Water-Based Fluid
- [H₂S]gas: 3.2% mol/mol in balance with CO₂
- Scav. Dosage (solid): 3.0 g of solid product, equivalent to 3 Ib/bbl (8.571 g/L);
- Scav. Dosage (liquid): 0.35 mL of liquid product, equivalent to 0.36 Ib/bbl (1.029 g/L).

### RESULTS

### Characterization of the evaluated products

The average content of active matter in the nanostructured compounds, obtained from two determinations in distinct aliquots of each sample, are presented in Table VII and indicate that the zinc concentration is similar to that estimated by the manufacturer (nChemi), then co-owner of this work. For iron, however, the levels found were lower than initially estimated. For the calculation of the H₂S scavenging capacity, the content of active matter effectively found in each provided product was used.

**Table VII - Physicochemical Parameters Evaluated in the Products**

| H₂S Scavenger | Active Matter (AM) | Expected AM content (% m/m) | Measured AM content (% m/m) |
|---|---|---|---|
| OZ | Zn | 3.21 | 3.49 |
| OF-AE | Fe | 3.17 | 1.32 |
| OF-PE | Fe | 2.30 | 1.06 |
| OF-PT | Fe | 2.30 | 1.35 |

The observed difference between the estimated and measured active matter content is a typical behavior in nanostructures, due to the stoichiometric relation not being obeyed in the composition of the crystals on a nanometric scale. The occurrence of flaws in the composition of the crystalline network leads to different values in the relation of the chemical elements in the composition of the nanostructured crystals. Additionally, given the characteristics of the samples and the analytical technique employed, there is a possibility that a prior treatment of the samples for iron analysis, with acid and microwave heating, may eventually lead to better recoveries of the elements under study.

### H₂S scavenging capacity of conventional products in drilling fluids, obtained from results of previous studies

Table VIII presents H₂S scavenging capacity results of metal oxides and MEA-triazine, obtained in studies carried out on WBDF and NADF drilling fluids, for comparison with the results obtained with the nanostructured products of this invention.

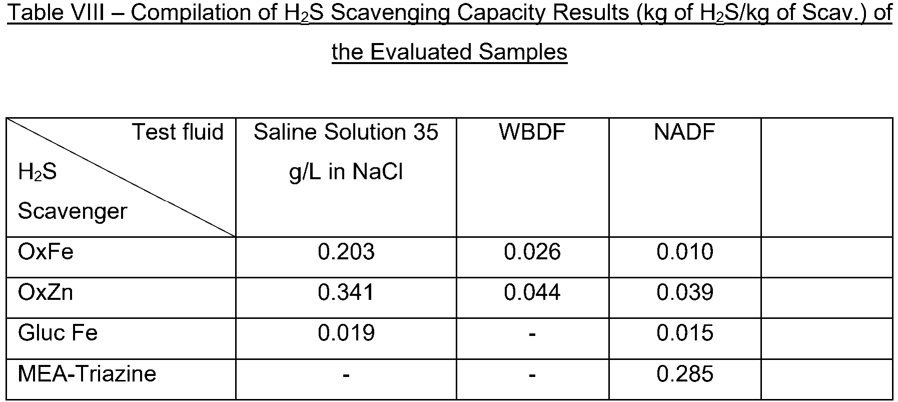

These results show the clear influence of the fluid's nature on the H₂S scavenging capacity of the tested products, since in saline solution the metal oxides showed a significantly higher scavenging capacity when compared to real drilling fluids, WBDF and NADF. The reduction in the scavenging capacity of the oxides observed in WBDF and NADF is possibly associated with the higher viscosity of these fluids and the organic charge present in their composition, generating an encapsulation of the metal oxides, hindering dispersibility in the fluid and, consequently, the contact with H₂S.

It is further observed that, in general, the zinc oxide showed a higher H₂S scavenging capacity than the iron oxide. The sample of iron (II) gluconate in organic fluid (NADF) showed a lower H₂S scavenging capacity, but close to that of iron oxide.

### H₂S Scavenging Capacity of Nanostructured Products in Drilling Fluids

### A. At a dosage of 0.3 Ib/bbl (0.857 q/L) in saline solution

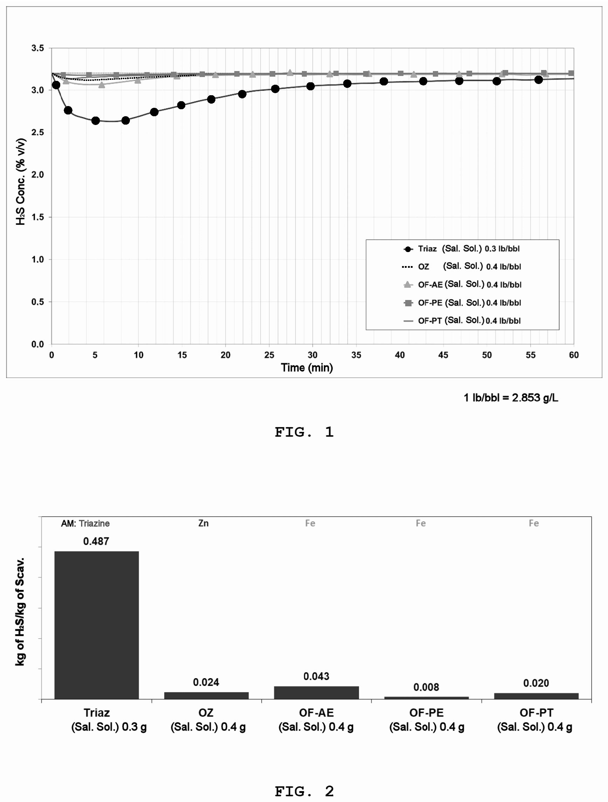

A first set of tests with the nanostructures was carried out with an exploratory bias using a dosage of 1000 µL/L of the evaluated products, in relation to the volume of liquid in the reaction medium, which is equivalent to approximately 0.36 lb/bbl (1.029 g/L). The behavior of the H₂S content in the gas phase throughout the tests is presented in Figure 1, which indicates that the nanostructured products have some H₂S scavenging capacity, but the larger area presented by the monoethanolamine-triazine (MEA-triazine)-based product stands out, signaling the greater H₂S scavenging capacity of this product in aqueous saline solution containing 35 g/L of NaCl, when compared at the same dosage.

Table IX presents the results of H₂S scavenging capacity in terms of mass of H₂S consumed per mass of whole H₂S scavenger used, as well as per mass of active matter (AM) present in each product evaluated, considering the saline solution content presented in Table VII.

**Table IX - H₂S Scavenging Capacity in Saline Solution at the Dosage of 0.3 Ib/bbl (0.857 g/L)**

| Fluid | H₂S Scavenger | m of H₂S/ m of Scav. (kg/kg) | m of H₂S/ m of AM (kg/kg) |
|---|---|---|---|
| | MEA-Triazine | 0.487 | 0.584 |
| | OZ | 0.024 | 0.680 |
| Saline Solution | OF-AE | 0.043 | 3.280 |
| | OF-PE | 0.008 | 0.772 |
| | OF-PT | 0.020 | 1.496 |

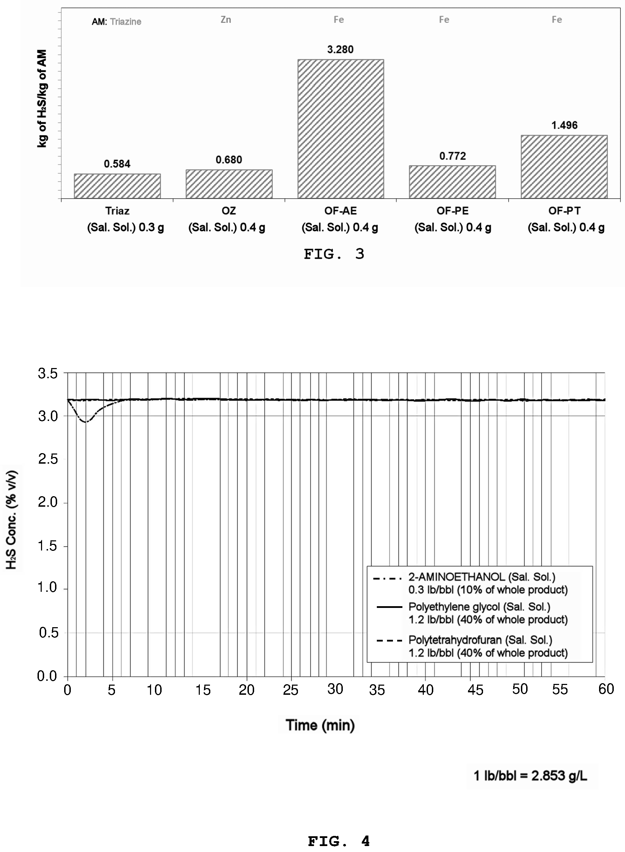

Among the products evaluated in saline solution, the product containing 83% m/m MEA-triazine stands out, presenting a higher H₂S scavenging capacity (0.5 kg of H₂S/kg of Scav.) than the nanostructured products (< 0.05 kg of H₂S/kg of Scav.), considering the commercial product as supplied. This behavior signals the need for a smaller volume of the MEA-Triazine chemical product to be shipped in the field to obtain a similar result. Figures 2 and 3 represent the H₂S scavenging capacity in relation to the whole product and the active matter (AM) content, respectively.

In turn, in terms of active matter (AM) content, it is observed that the H₂S scavenging capacity of the nanostructured products OZ and OF-PE is similar to that of MEA-triazine, while OF-PT and OF-AE show higher results than MEA-triazine. These results are promising if there is a possibility of increasing the AM content in the nanostructured products, in order to allow the shipment of a smaller quantity of product.

It is worth mentioning the expectation that OF-PE (0.008 kg of H₂S/kg of Scav.), intended for application in aqueous medium, would exhibit a higher scavenging capacity than OF-PT (0.020 kg of H₂S/kg of Scav.), intended for application in organic medium, which was not observed in this set of results. This behavior may be related to the physicochemical characteristics of the component used in the functionalization of the nanostructures and the interaction of this component with the aqueous fluid; however, this relation was not studied within the scope of the present invention. However, the H₂S scavenging capacity of the functionalizing compounds was evaluated in saline solution and is presented in item B.

### B. As to the functionalizing compounds of the nanostructures

To evaluate the contribution of the components used in the functionalization on the H₂S scavenging capacity of the nanostructured product, tests were carried out with 2-aminoethanol, polytetrahydrofuran, and polyethylene glycol, free of the metal oxides, and subjected to the same method as the whole product. In the three compounds, the highest expected amount of each functionalizing compound was used (Table I), equivalent to the dosage of 3 Ib/bbl (8.751 g/L) of whole product, therefore, 40% m/m of polyethylene glycol and polytetrahydrofuran, and 10% m/m of 2-aminoethanol.

For polyethylene glycol and polytetrahydrofuran, both solid compounds, solutions were prepared with distilled water and ethanol, respectively, at the concentration of 0.4 g/mL, and 1.2 Ib/bbl (3.428 g/L) was injected, which corresponds to 40% m of the dosage of 3 Ib/bbl (8.571 g/L) of OF-PE and OF-PT. For 2-aminoethanol, which is already in liquid form, the dosage of 0.3 Ib/bbl (0.857 g/L) was injected, which corresponds to 10% m of the dosage of 3 Ib/bbl (8.571 g/L) of OF-AE.

Figure 4 presents the behavior of the H₂S content in the gas phase of the test and indicates that polyethylene glycol and polytetrahydrofuran do not have a significant H₂S scavenging capacity, while 2-aminoethanol has a measurable H₂S scavenging capacity of approximately 0.03 kg of H₂S/kg of Scav., which represents a significant portion of what OF-AE showed in this fluid (0.043 kg/kg).

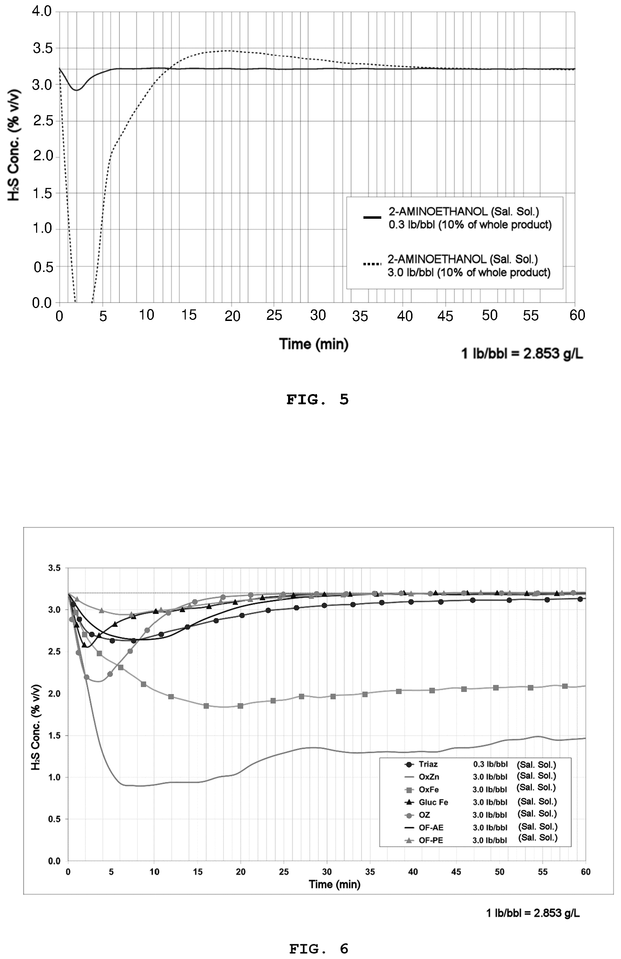

However, as can be seen in Figure 5, using an overdose of 3.0 Ib/bbl (8.571 g/L), that is, 10 times the dosage of the previous test (0.3 Ib/bbl (0.857 g/L)), there is an indication that the H₂S scavenged by 2-aminoethanol is returned to the reaction system, signaling that the H₂S scavenging reaction may be reversible for this component after saturation.

In an open drilling fluid circulation system, the reversibility of the reaction represents a major operational occupational health risk for the crew of workers on board the rig.

### C. At a dosage of 3.0 Ib/bbl (8.571 g/L) in saline solution

In order to improve the sensitivity in the comparison between the products, tests were carried out in saline solution with a dosage 10 times higher, on the order of 3.0 Ib/bbl (8.571 g/L) of commercial product. This is the typical dosage of the conventional H₂S scavengers, based on metal oxides, currently used in the drilling scenario. The results obtained were compared to the H₂S scavenging capacity of MEA-triazine at the dosage of 0.3 Ib/bbl (0.857 g/L), typical in production environments.

Figure 6 represents the behavior of H₂S content in the gas phase over time for one of the three tests performed on each product evaluated, for comparison purposes. The tests were performed in triplicate, and Table X shows the average H₂S scavenging capacity of each product evaluated and the respective confidence intervals (t = 1.96, α = 95%). In the case of the zinc oxide (OxZn), iron oxide (OxFe), and iron (II) gluconate (Gluc Fe) products, for which individual tests were performed, an experimental method uncertainty of 10% was adopted for each result obtained.

**Table X - Average H₂S Scavenging Capacity in Saline Solution**

| Fluid | H₂S Scavenger | m of H₂S/ m of Scav. (kg/kg) | m of H₂S/ m of AM (kg/kg) |
|---|---|---|---|
| | MEA-Triazine | 0.462 ± 0.0249 | 0.554 ± 0.030 |
| | OxZn | 0.341 ± 0.0341 | 0.425 ± 0.043 |
| Saline Solution | OZ | 0.028 ± 0.0007 | 0.795 ± 0.020 |
| | OxFe | 0.203 ± 0.0203 | 0.308 ± 0.031 |
| | Gluc Fe | 0.019 ± 0.0019 | 0.027 ± 0.003 |
| | OF-AE | 0.031 ± 0.0074 | 2.365 ± 0.557 |
| | OF-PE | 0.015 ± 0.0025 | 1.392 ± 0.239 |

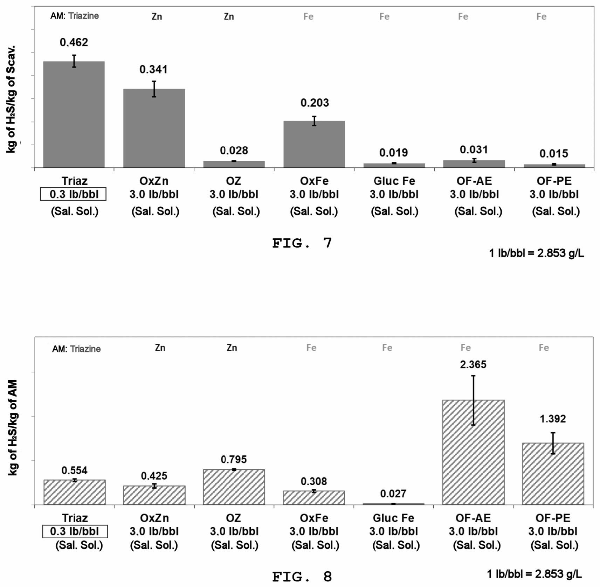

It is verified that the injection of the nanostructured products at the dosage of 3.0 Ib/bbl (8.571 g/L), typical of the conventional products currently applied, allows for better classification of the evaluated products. MEA-triazine (TRIA), even at a dosage of 0.3 Ib/bbl (0.857 g/L), showed the greatest capacity for H₂S scavenging, followed by zinc oxide and iron oxide. The results were greater than 0.2 kg of H₂S/kg of Scav., while the nanostructured products showed a scavenging capacity between 0.015 and 0.030 kg of H₂S/kg of Scav., therefore lower than the conventional solid H₂S scavengers (Figure 7).

Among the nanostructured products, OF-AE showed the greatest capacity to scavenge H₂S in aqueous saline solution. However, it was observed that this product shows greater dispersion of the obtained results, and the possible cause for both behaviors is the functionalization component present, 2-aminoethanol, which increases the consumption of H₂S from the medium; however, as verified in item B, it can reverse the reaction by returning the H₂S to the reaction medium.

The H₂S scavenging capacity in relation to the active matter content of each product evaluated is illustrated in Figure 8. It is once again verified that the OF-AE and OF-PE H₂S scavengers stand out in relation to the others. However, when compared to the results at a dosage of 0.3 Ib/bbl (0.857 g/L), a slight reduction in the scavenging capacity of OF-AE and an increase for the OF-PE product are observed, making the greater dispersion of the OF-AE results more evident.

### D. At a dosage of 3.0 Ib/bbl (8.57 q/L) in Water-Based Drilling Fluid (WBDF)

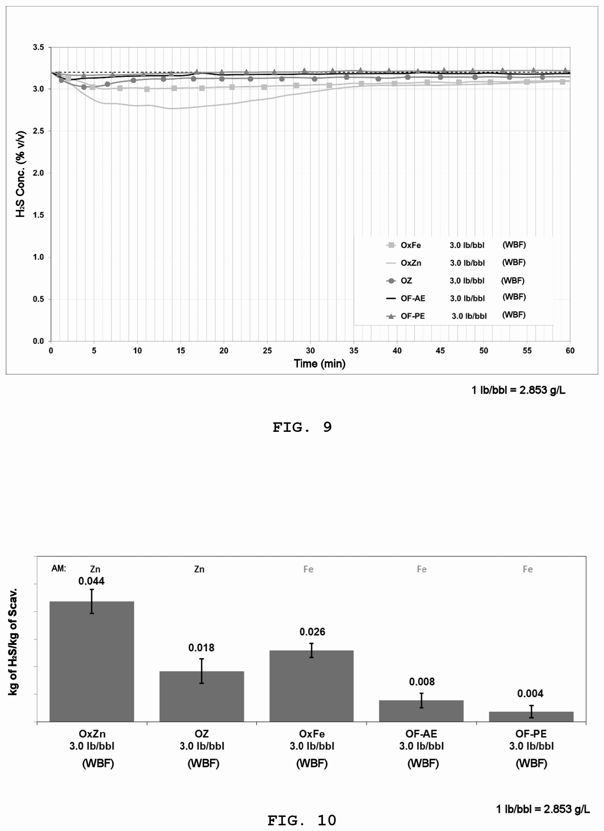

Figure 9 presents the behavior of H₂S in the gas phase, in tests carried out in WBDF, and Table XI shows the respective H₂S scavenging capacities. MEA-triazine was not evaluated in this fluid, and the nanostructured products were compared to the conventional metal oxides at the same dosage of 3.0 Ib/bbl (8.57 g/L).

It is observed that zinc oxide and iron oxide are the ones that present the greatest capacity for scavenging H₂S in WBDF. However, it is verified that, in a real drilling fluid, the scavenging capacity of the nanostructured products approaches that of the conventional metal oxides (Figure 10), when compared to the results obtained in saline solution, confirming a hypothesis put forth in the introduction of this work: that the greater area/volume ratio typical of nanostructures provides greater mass available for sulfide reaction, when compared to larger structures; therefore, it is possible to achieve the same amount of scavenged H₂S using a smaller mass of scavenger.

**Table XI - Compilation of data and results obtained in WBDF**

| Fluid | H₂S Scavenger | m of H₂S/ m of Scav. (kg/kg) | m of H₂S/ m of AM (kg/kg) |
|---|---|---|---|
| | OxZn | 0.0436 ± 0.0044 | 0.0543 ± 0.0054 |
| Saline Solution | OZ | 0.0184 ± 0.0045 | 0.5262 ± 0.1288 |
| | OxFe | 0.0258 ± 0.0026 | 0.0392 ± 0.0039 |
| | OF-AE | 0.0077 ± 0.0027 | 0.5866 ± 0.2014 |
| | OF-PE | 0.0037 ± 0.0022 | 0.3486 ± 0.2120 |

Among the nanostructured products, OZ, based on zinc nanostructure, stood out, although with a scavenging capacity still lower than that of the zinc oxide. The results indicate that it would be necessary to ship in the field a quantity of the OZ product approximately 3 times greater than that of the conventional zinc oxide to obtain the same amount of scavenged H₂S. On the other hand, this result also signals the possibility of obtaining a similar scavenging capacity between these two products, if the zinc content can be tripled in the active matter of this product, that is, increasing from 3.2% m/m to around 10% m/m.

The same observation can be made with respect to OF-AE and OF-PE regarding the increase in active matter content. In this case, it would be recommended to increase the iron content from 1% m/m (Table VII) to around 6% m/m, with the expectation of thus achieving a scavenging capacity similar to that of the conventional iron oxide. Naturally, increasing the active matter content in the nanostructured compounds depends on an evaluation of the technical and economic feasibility by the product manufacturer, in order to maintain the other expected physicochemical characteristics.

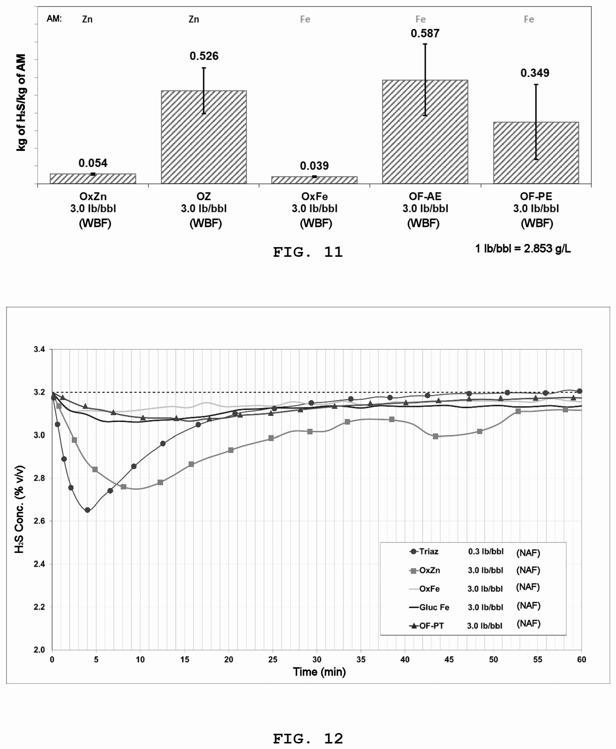

Additionally, the results of H₂S scavenging capacity in relation to the active matter content (Figure 11) corroborate the observations already presented, reinforcing that, in addition to the efficiency gain with the increase in the active matter content in the nanostructure, results similar to those of the conventional products would be obtained with lower levels of iron and zinc effectively present in the whole product.

Another bias to be considered concerns the ecotoxicity potential of the H₂S scavengers used in drilling fluids, since the nanostructured products indicate a potential for greater H₂S scavenging capacity relative to their mass, which would lead to a lower quantity of these elements in the spent drilling fluids. In this sense, adjusting the content of active matter, especially iron, in the commercial nanostructured products may be a way to make this technology more attractive and viable for field application.

It is further worth mentioning that, in this set of tests, a greater variability in the triplicate results of the nanostructured products was observed, which may be related to the stability of the product over time, possibly due to the separation between solvent and nanoparticle, or even between active matter and functionalization. This characteristic needs to be considered and evaluated in subsequent studies.

### E. At a dosage of 3.0 Ib/bbl (8.57 g/L) in Non-Aqueous Drilling Fluid (NADF)

Figure 12 presents the H₂S content curves, and Table XII shows the averages and confidence intervals obtained (t = 1.96, α = 95%), comparing the behavior of the conventional oxides with the OF-PT nanostructured product, in NADF. The OF-PT compound and the MEA-triazine were evaluated in triplicate, while the oxides and iron (II) gluconate are individual tests obtained in previous studies under the same experimental conditions. In these cases, to determine the confidence interval, an uncertainty of 10% related to the experimental method was adopted.

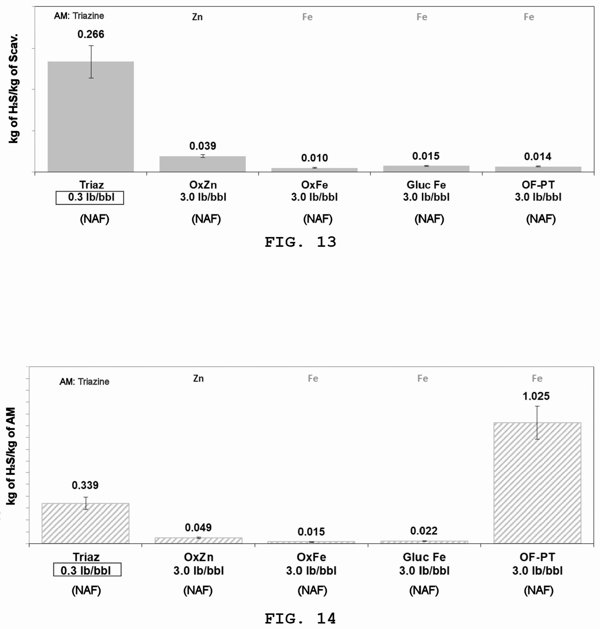

It is observed that MEA-triazine, in NADF, has a H₂S scavenging capacity 5 to 20 times higher than the other products evaluated (Figure 13). Comparing OF-PT in the same fluid with the conventional products, iron oxide and zinc oxide, it is observed that the nanostructured product has a similar H₂S scavenging capacity to iron oxide and about half the capacity of zinc oxide, which indicates a significant potential to obtain results similar to the conventional products, with a lower content of active matter than that present in the conventional products. As mentioned earlier, an increase in the iron content in the active matter of OZ, if technically possible, can lead to performances similar to the conventional products, with less potential for environmental impact.

**Table XII - Average H₂S Scavenging Capacity in NADF**

| Fluid | H₂S Scavenger | m of H₂S/ m of Scav. (kg/kg) | m of H₂S/ m of AM (kg/kg) |
|---|---|---|---|
| | TRIA | 0.2661 ± 0.0398 | 0.3395 ± 0.0508 |
| Saline Solution | OxZn | 0.0394 ± 0.0039 | 0.0491 ± 0.0049 |
| | OxFe | 0.0102 ± 0.0010 | 0.0155 ± 0.0015 |
| | Gluc Fe | 0.0151 ± 0.0015 | 0.0219 ± 0.0022 |
| | OF-PT | 0.0138 ± 0.0014 | 1.0254 ± 0.1403 |

Since the type of interaction of H₂S with the functionalized nanoparticles is different from the interaction of the traditional Fe₃O₄ or ZnO particles, due to the presence of the organic molecules on their surface, it is necessary to expand the study of impacts and side effects of the nanostructures on the intrinsic characteristics of the drilling fluids and their ecotoxicity, in the recovery and/or disposal processes, as well as the economic viability, aiming to give sufficient maturity to the technology and enabling its effective application in real scenarios.

### CONCLUSIONS

The zinc- and iron-based nanostructured products, when evaluated in water-based drilling fluid (WBDF) and non-aqueous drilling fluid (NADF), showed lower H₂S scavenging capacity than the respective conventional oxides currently used. However, when compared in relation to the active matter content, the behavior is reversed, and the nanostructured products show a higher H₂S scavenging capacity than the conventional products (Figures 11 and 14).

Under the same experimental conditions, the MEA-triazine-based product showed a greater H₂S scavenging capacity than the nanostructured products and conventional metal oxides at a dosage 10 times lower. However, when the H₂S scavenging capacity was evaluated in relation to the active matter content, the nanostructured products presented a greater scavenging capacity.

Among the functionalization components used in the nanostructured products, only 2-aminoethanol showed measurable H₂S scavenging capacity, while the others, polyethylene glycol and polytetrahydrofuran, did not show a significant reaction capacity with H₂S at the evaluated dosages. However, it was observed that 2-aminoethanol, used in the functionalization of the OF-AE compound, has the potential to reverse the scavenging reaction, returning H₂S to the reaction medium.

In WBDF, the conventional metal oxides showed greater H₂S scavenging capacity; however, the OZ nanostructured product, zinc-based nanostructure, presented a promising performance, with the potential to obtain a similar scavenging capacity, if the zinc content can be increased from 3.2% m/m to around 10% m/m. As currently formulated, it is estimated that it would be necessary to ship an amount of the OZ product about 3 times greater than that of the conventional zinc oxide to obtain the same amount of scavenged H₂S.

In turn, the OF-AE compound presented greater H₂S scavenging capacity than OF-PE in WBDF. However, it should be taken into account that the functionalizing component of OF-AE, 2-aminoethanol, may have provided an increase in the H₂S scavenging capacity, although with the risk of reversal of the reaction with H₂S.

For OF-PE, it is worth mentioning that the increase of the active matter content, in this case iron, from around 1% m/m (Table VII) to around 6% m/m, could lead the H₂S scavenging capacity to approach that of the conventional iron oxide.

In NADF, it is observed that the OF-PT compound has an H₂S scavenging capacity similar to that of the iron oxide and about half the capacity of the zinc oxide, indicating a potential for obtaining results similar to the conventional products with a lower active matter content. This behavior is likely related to the type of interaction between H₂S and the functionalized nanoparticles, which are organic molecules, unlike the interaction between the particles in the conventional Fe₃O₄ or ZnO products.

In an aqueous saline solution, the OF-PE compound, functionalized with polyethylene glycol and recommended for application in aqueous medium, presented a lower H₂S scavenging capacity than OF-PT, functionalized with polytetrahydrofuran and recommended for application in organic medium.

With the nanostructured products, there is a potential to obtain H₂S scavenging capacity results similar to the conventional products, iron oxide and zinc oxide, with a lower content of active matter compared to the conventional products. This approach is related to the ecotoxicity potential of the H₂S scavengers used in drilling fluids, since there is a higher ratio of performance to amount of iron or zinc present in the commercial product, which would lead to a lower amount of these elements in the drilling fluids. Therefore, it is possible to achieve the same amount of scavenged H₂S using a smaller mass of scavenger, bringing gains in logistics (transport and storage) and reducing environmental impact (less use of metals in the process).

## Claims

1. A use of nanostructured on iron- or zinc-based compounds, **characterized in that** it is for application in Water-Based Drilling Fluids (WBDF) or Non-Aqueous Drilling Fluids (NADF) to scavenge H₂S present in the medium.

2. The use according to claim 1, **characterized in that** the nanostructured compounds consist of an inorganic core as the active matter, a functionalizing compound, and a solvent.

3. The use according to claims 1 and 2, **characterized in that** the inorganic core is selected from the compounds ZnO and Fe₃O₄.

4. The use according to claim 3, **characterized in that** the zinc content in the active matter varies from 3.2% m/m to 10% m/m.

5. The use according to claim 3, **characterized in that** the iron content in the active matter varies from 1% m/m to 6% m/m.

6. The use according to any one of claims 1 to 5, **characterized in that** the size of the inorganic core varies from 5 to 15 nm.

7. The use according to claim 1, **characterized in that** the functionalizing compound is selected from 2-aminoethanol, polyethylene glycol, or polytetrahydrofuran.

8. The use according to claim 7, **characterized in that** the content of the functionalizing compound varies from 10% m/m to 40% m/m.

9. The use according to claim 1, **characterized in that** the solvent is water or tetrahydrofuran.

10. The use according to any one of claims 1 to 9, **characterized in that** the nanostructured iron- or zinc-based compounds have a concentration of 1 to 15% m/m.

11. The use according to any one of claims 1 to 10, **characterized in that** the nanostructured OZ, OF-AE, and OF-PE compounds are applied in Water-Based Drilling Fluids (WBDF).

12. The use according to any one of claims 1 to 11, **characterized in that** the nanostructured OF-PT compound is applied in Non-Aqueous Drilling Fluids (NADF).
